# EUROPÄISCHE PATENTSCHRIFT

(11) **EP 4 448 978 B1**
(45) Veröffentlichungstag und Bekanntmachung des Hinweises auf die Patenterteilung: **28.01.2026**
(21) Anmeldenummer: 22838633.0
(22) Anmeldetag: 07.12.2022
(51) Int. Cl.: F16D 55/20, F16D 55/40, F16D 65/853

(54) **BREMS- UND/ODER KLEMMVORRICHTUNG MIT KOLBENBELASTBAREM SCHEIBENELEMENT**
BRAKE AND/OR CLAMPING DEVICE WITH PISTON LOAD DISC ELEMENT
DISPOSITIF DE FREIN ET/OU DE SERRAGE AVEC ÉLÉMENT DE DISQUE DE CHARGE À PISTON

(30) Priorität: 16.12.2021 DE 102021006219
(43) Veröffentlichungstag der Anmeldung: 23.10.2024
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2022/000118
(87) Internationale Veröffentlichungsnummer: WO 2023/109993

(56) Entgegenhaltungen:
- WO-A1-2008/054294
- BE-A- 903 444
- DE-A1- 1 625 452
- GB-A- 1 208 555

## Beschreibung

Die Erfindung betrifft eine Brems- und/oder Klemmvorrichtung mit einem ringförmigen, mindestens einen pneumatischen oder hydraulischen Anschluss aufweisenden, eine in axialer Richtung orientierte Stangenaufnahme umgreifenden Gehäuse, wobei das Gehäuse ein Bodenteil und ein Deckelteil hat und wobei innerhalb des Gehäuses mindestens ein ringförmiger Druckraum angeordnet ist.

Aus der WO 2004/067 222 A1 ist eine derartige Brems- und/oder Klemmvorrichtung bekannt. Der Druckraum ist mittels eines ringförmigen Schlauches begrenzt. Beim Klemmen wird ein in der Längsrichtung geschlitzter, umlaufender Ring verformt. DE 16 25 452 A1 weiter zeigt eine Vorrichtung gemäß dem Oberbegriff des unabhängigen Anspruchs 1.

Der vorliegenden Erfindung liegt die Problemstellung zugrunde, eine schnell ansprechende Brems- und/oder Klemmvorrichtung mit geringem Hub und hoher Genauigkeit zu entwickeln.

Diese Problemstellung wird mit den Merkmalen des Hauptanspruches gelöst. Dazu ist der Druckraum mittels mindestens eines, eine gewölbte Kolbenoberseite aufweisenden, in axialer Richtung verfahrbaren Kolbens in axialer Richtung begrenzt. Der Druckraum ist in radialer Richtung mittels der Außenwandungen des Gehäuses und mittels mindestens eines Innenrings begrenzt, der eine mindestens einen Innenwandabschnitt aufweisende Innenwandung des Gehäuses umgreift. Auf der dem Druckraum abgewandten, in axialer Richtung zeigenden Kolbenoberseite ist im Gehäuse ein Scheibenelement angeordnet, wobei die Kolbenoberseite an diesem Scheibenelement anliegt, anlegbar oder fixierbar ist. Der Innenwandabschnitt ist jeweils auskragend in einem Deckelteil oder in einem Bodenteil des Gehäuses angeordnet. Das Scheibenelement liegt an dem Innenwandabschnitt an, sodass mit zunehmender Verformung des Scheibenelements die radial in Richtung einer in axialer Richtung orientierten Längsachse der Brems- und/oder Klemmvorrichtung gerichtete Belastung des Innenwandabschnitts abnimmt.

Die Brems- und/oder Klemmvorrichtung wird zum Bremsen und/oder Klemmen relativ zueinander bewegter Maschinenteile eingesetzt. Hierbei umgreift die Brems- und/oder Klemmvorrichtung eine Stange, deren Mittellinie z.B. mit der Längsachse der Brems- und/oder Klemmvorrichtung zusammenfällt. Im druckentlasteten Zustand hat der Druckraum sein minimales Volumen. Das oder die Scheibenelemente haben ihre ursprüngliche Gestalt. Sie belasten die Innenwandung, deren Innenwandabschnitte zur Längsachse hin verformt sind. Bei in die Brems- und/oder Klemmvorrichtung eingesetzter Stange werden in diesem Klemmzustand die Innenwandabschnitte an die Stange angepresst.

Zum Lüften der Brems- und/oder Klemmvorrichtung wird der Druckraum mit pneumatischem oder hydraulischem Druck beaufschlagt. Der Druckraum wird vergrößert, wobei der mindestens eine, den Druckraum begrenzende Kolben verschoben wird. Jeder Kolben belastet - bei druckbeaufschlagtem Druckraum - mindestens ein Scheibenelement und verformt dieses. Hierdurch wird die Innenwandung entlastet. Die selbstrückstellenden Innenwandabschnitte nehmen ihre unbelastete Ausgangslage ein. Die Klemmung der Stange wird aufgehoben oder vermindert.

Weitere Einzelheiten der Erfindung ergeben sich aus den Unteransprüchen und der nachfolgenden Beschreibung schematisch dargestellter Ausführungsformen.
- Figur 1:: Brems- und/oder Klemmvorrichtung;
- Figur 2:: Bodenteil;
- Figur 3:: Deckelteil;
- Figur 4:: Kolben;
- Figur 5:: Innenring;
- Figur 6:: Scheibenelement;
- Figur 7:: Vorrichtung aus Figur 1 bei abgenommenen Deckelteil;
- Figur 8:: Vorrichtung nach Figur 1 im Klemmzustand;
- Figur 9:: Vorrichtung nach Figur 1 im gelüfteten Zustand;

- Figur 10:: Brems- und/oder Klemmvorrichtung mit einem Kolben;
- Figur 11:: Variante einer Brems- und/oder Klemmvorrichtung;
- Figur 12:: Bodenteil der Vorrichtung nach Figur 11;
- Figur 13:: Deckelteil der Vorrichtung nach Figur 11;
- Figur 14:: Innenring der Vorrichtung nach Figur 11;
- Figur 15:: Scheibenelement der Vorrichtung nach Figur 11;
- Figur 16:: Isometrische Schnittdarstellung der Figur 11;
- Figur 17:: Vorrichtung nach Figur 11 im gelüfteten Zustand;
- Figur 18:: Vorrichtung nach Figur 11 im Klemmzustand;

- Figur 19:: Weitere Variante einer Brems- und/oder Klemmvorrichtung;
- Figur 20:: Bodenteil der Brems- und/oder Klemmvorrichtung aus Figur 19;
- Figur 21:: Deckelteil der Brems- und/oder Klemmvorrichtung aus Figur 19;
- Figur 22:: Scheibenelement;
- Figur 23:: Vorrichtung der Figur 19 im Klemmzustand;
- Figur 24:: Vorrichtung der Figur 19 im gelüfteten Zustand;
- Figur 25:: Detail der Figur 24.

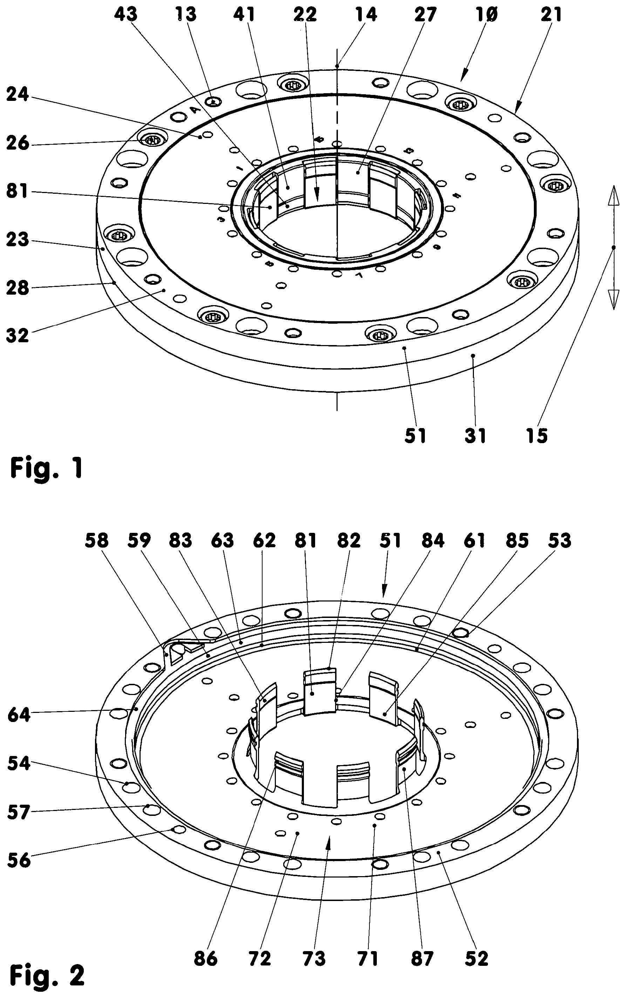

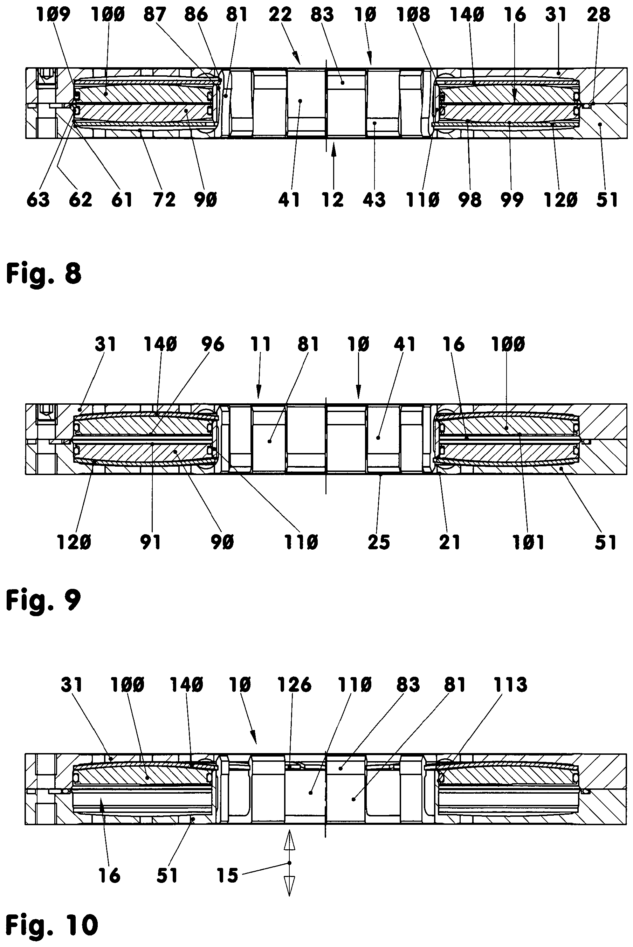

Die Figuren 1 - 9 zeigen eine Brems- und/oder Klemmvorrichtung (10). Derartige Vorrichtungen (10) werden beispielsweise an Werkzeugmaschinen eingesetzt, um z.B. Maschinentische relativ zu Führungsstangen zu verzögern oder zu fixieren. Die Brems- und/oder Klemmvorrichtung (10) ist in axialer Richtung (15) entlang der Führungsstange verfahrbar oder verstellbar. In radialer Richtung umgreift die Brems- und/oder Klemmvorrichtung (10) die hier nicht dargestellte Führungsstange vollständig. Die Brems- und/oder Klemmvorrichtung (10) hat zwei Betriebszustände. Ein erster Betriebszustand ist eine gelüftete oder gelöste Stellung (11), vgl. Figur 9. In dieser gelüfteten Stellung (11) ist die Brems- und/oder Klemmvorrichtung (10) in ihren axialen Richtungen (15) relativ zur Führungsstange z.B. verfahrbar. Der andere Betriebszustand ist eine Klemmstellung (12), vgl. Figur 8. In dieser Klemmstellung (12) liegt die Brems- und/oder Klemmvorrichtung (10) zum Bremsen und/oder Blockieren radial pressend an der Führungsstange an.

Die Brems- und/oder Klemmvorrichtung (10) hat ein z.B. ringförmiges, flaches Gehäuse (21) mit einer beispielsweise zentralen Stangenaufnahme (22). Die z.B. kreisförmige Querschnittsfläche der Stangenaufnahme (22) ist normal zu der in axialer Richtung (15) orientierten zentralen Längsachse (14) der Brems- und/oder Klemmvorrichtung (10) orientiert. Diese Längsachse (14) fällt mit der Mittellinie der Stangenaufnahme (22) zusammen. Die Mantelfläche (23) des Gehäuses (21) ist beispielsweise koaxial zur Stangenaufnahme (22) ausgebildet.

Die Stangenaufnahme (22) hat im Ausführungsbeispiel einen Nenndurchmesser von 50 Millimetern. Dieser Nenndurchmesser entspricht dem Außendurchmesser der in der Stangenaufnahme (22) aufnehmbaren Führungsstange. Der Durchmesser der Stangenaufnahme (22) ist bei gelüfteter Brems- und/oder Klemmvorrichtung (10) beispielsweise um 0,06 % größer als der Nenndurchmesser. In der Klemmstellung (12) kann - bei nicht eingesetzter Führungsstange - der Durchmesser z.B. bis auf 96 % des Nenndurchmessers reduziert sein.

Der Außendurchmesser der Brems- und/oder Klemmvorrichtung (10) beträgt im Ausführungsbeispiel das 2,9-fache des Nenndurchmessers. Die in axialer Richtung (15) orientierte Länge der Brems- und/oder Klemmvorrichtung (10) beträgt beispielsweise 34 % des Nenndurchmessers. Die Länge der Brems- und/oder Klemmvorrichtung (10) ist damit kleiner als 50 % des Nenndurchmessers der Stangenaufnahme (22).

Das Gehäuse (21) hat im Ausführungsbeispiel sowohl an seiner Oberseite (24) als auch an seiner Unterseite (25) einen pneumatischen Anschluss (13). Einer dieser Anschlüsse (13) kann mittels eines Blindstopfens verschlossen sein. Es ist auch denkbar, an der Oberseite (24) und/oder an der Unterseite (25) zwei Anschlüsse vorzusehen. Auch können ein Anschluss oder mehrere Anschlüsse an der Mantelfläche (23) der Brems- und/oder Klemmvorrichtung (10) vorgesehen sein. Im Ausführungsbeispiel sitzt der pneumatische Anschluss (13) im Randbereich (32) eines Deckelteils (31) des Gehäuses (21). Anstatt des mindestens einen pneumatischen Anschlusses (13) kann auch mindestens ein hydraulischer Anschluss im Gehäuse (21) vorgesehen sein.

Das Gehäuse (21) umfasst ein Bodenteil (51) und das mit diesem gefügte Deckelteil (31). Im Ausführungsbeispiel sind die beiden Teile (31, 51) miteinander verschraubt. Hierfür sind sowohl im Deckelteil (31) als auch im Bodenteil (51) Verbindungsschrauben (26) eingesetzt und in Gewinden (53; 33) im jeweils anderen Teil (51; 31) eingeschraubt. Die beiden Teile (31, 51) können aber auch miteinander stoffschlüssig, z.B. mittels einer Schweißverbindung oder kraft- und/oder formschlüssig, beispielsweise mittels einer Schraubverbindung oder mittels Verriegelungselementen, verbunden sein. Die Verbindungsschrauben (26) sind hier jeweils im Randbereich (32) angeordnet.

Die die Stangenausnehmung (22) begrenzende Innenwandung (27) des Gehäuses (21) wird im Ausführungsbeispiel aus der Hüllkontur von 16 Innenwandabschnitten (41, 81) gebildet. Die Innenwandabschnitte (41, 81) sind in diesem Ausführungsbeispiel als Klemmkontaktplatten (41, 81) ausgebildet. Die eine Hälfte dieser Klemmkontaktplatten (41, 81) ist am Bodenteil (51) angeordnet und ragt in Richtung des Deckelteils (31). Diese Klemmkontaktplatten (81) sind im Folgenden als erste Klemmkontaktplatten (81) bezeichnet. Die andere Hälfte der Kontaktplatten (41, 81) ist am Deckelteil (31) angeordnet und kragt in Richtung des Bodenteils (51) aus. Diese Klemmkontaktplatten (41) sind im Folgenden als zweite Klemmkontaktplatten (41) bezeichnet. Die einzelne Klemmkontaktplatte (41; 81) hat an ihrem freien Ende (42, 82) eine Klemmkontaktzone (43; 83). Diese zeigt z.B. radial in Richtung der Längsachse (14).

Im Ausführungsbeispiel sind alle Innenwandabschnitte (41; 81) identisch ausgebildet und sind entlang eines gemeinsamen, **z.B.** in der Ebene der Trennfuge (28) des Gehäuses (21) liegenden Teilkreis angeordnet. Im Ausführungsbeispiel sind sie jeweils entlang einer ringförmigen Linie angeordnet. Sie haben die gleichen geometrischen Abmessungen. Es ist aber auch denkbar, einzelne Innenwandabschnitte (41; 81) oder Gruppen von Innenwandabschnitten (41; 81) z.B. mit anderer, in Umfangsrichtung orientierter Breite auszubilden. Beispielsweise kann der einzelne Innenwandabschnitt (41; 81) stiftartig ausgebildet sein.

Die in der Figur 1 dargestellten Klemmkontaktbacken (41; 81) haben einen gleichmäßigen Abstand zueinander. Der Abstand zwischen den einzelnen Klemmkontaktplatten (41; 81) kann aber auch unterschiedlich ausgebildet sein.

Die Figur 2 zeigt das Bodenteil (51). Das Bodenteil (51) hat eine starre Außenwandung (52), einen Boden (71) und die ersten Klemmkontaktplatten (81). Die Außenwandung (52) wird in axialer Richtung (15) von Durchgangsbohrungen (54) und Gewindebohrungen (53) für die Verbindungsschrauben (26) durchdrungen. Weiterhin sind in der Außenwandung (52) Zentrierbolzenaufnahmen (56) und Montagebohrungen (57) vorgesehen. In die Außenwandung (52) sind ein Verteilkanal (58) und ein Einlaufbereich (64) eingeprägt. Mittels dieses Verteilkanals (58) und des Einlaufbereichs (64) wird beispielsweise Druckluft vom pneumatischen Anschluss (13) in einen Druckraum (16) der Brems- und/oder Klemmvorrichtung (10) geleitet.

Die Außenwandung (52) ist zylindermantelförmig ausgebildet. Ihre Innenseite (59) ist mehrstufig aufgebaut. Angrenzend an den Boden (71) hat sie einen koaxial zur Längsachse (14) angeordneten Scheibenaufnahmebereich (61). An diesen schließt sich ein Übergangsbereich (62) an. Oberhalb des Übergangsbereichs (62) ist in den Darstellungen der Figuren 2, 8 und 9 ein äußerer Kolbenführungsbereich (63) ausgebildet. Der äußere Kolbenführungsbereich (63) ist zylindrisch koaxial zur Längsachse (14) ausgebildet. An den äußeren Kolbenführungsbereich (63) schließt am oberen Rand der Außenwandung (52) der Einlaufbereich (64) an.

Der Boden (71) ist ringförmig ausgebildet. Er hat eine zentrale Umlaufrinne (72), vgl. die Figuren 8 und 9. Die Breite der Umlaufrinne (72) entspricht im Ausführungsbeispiel 82 % des Abstands der Klemmkontaktplatten (81) zur Außenwandung (52). Die Krümmungsmittellinie liegt beispielsweise auf der Hälfte des oben genannten Abstands. Der Boden (71) kann an seiner Innenseite (73) auch halbseitig gekrümmt oder eben ausgebildet sein. Bei einer halbseitigen Krümmung kann diese außerhalb oder innerhalb eines zur Längsachse (14) koaxialen Zylinders zur Krümmungsmittellinie liegen.

Im Ausführungsbeispiel überdeckt die einzelne erste Klemmkontaktplatte (81) jeweils einen Ringabschnitt von 22 Grad. Sie sind mit dem Boden (71) des Bodenteils (51) verbunden. Die einzelne Klemmkontaktplatte (81) hat einen Klemmarm (84) z.B. weitgehend konstanter Querschnittsfläche. Der Außenradius des Klemmarms (84) ist beispielsweise um 3 % größer als der Innenradius. Der Klemmarm (84) kann auch bereichsweise eine z.B. rechteckige Querschnittsfläche haben. Ebenfalls kann der einzelne Klemmarm (84) gegenüber der restlichen Klemmkontaktplatte (81) verjüngt ausgebildet sein. Gegebenenfalls kann die einzelne Klemmkontaktplatte (81) an ihrer Innenseite (85) eine parallel zur Längsrichtung (14) orientierte Längskerbe aufweisen.

An der zur Längsachse (14) zeigenden Innenseite (85) der einzelnen Klemmkontaktplatte (81) ist die Klemmkontaktzone (83) ausgebildet. Diese ist beispielsweise um ein Zehntel Millimeter zur Längsachse (14) hin erhaben ausgebildet. Die Summe der Kontaktflächen aller Klemmkontaktzonen (43, 83) der ersten Kontaktplatten (81) und der zweiten Klemmkontaktplatten (41) ist im Ausführungsbeispiel größer als 20 % der Querschnittsfläche des Nenndurchmessers. Im Ausführungsbeispiel beträgt die Summe aller Kontaktflächen 25 % der Querschnittsfläche des Nenndurchmessers. Die Klemmkontaktzonen (43, 83) können eine Beschichtung, z.B. einen Brems- oder Reibbelag aufweisen.

An der Außenseite der Klemmkontaktplatten (81) ist beispielsweise jeweils eine Einstecknut (86) eingeprägt. Diese Einstecknut (86) verläuft in der Umfangsrichtung. Sie hat im Ausführungsbeispiel eine konstante Tiefe und eine konstante, in axialer Richtung (15) orientierte Länge. Die Einstecknut (86) beispielsweise einer Klemmkontaktplatte (81) kann einen z.B. in der Längsrichtung orientierten Zentriersteg aufweisen.

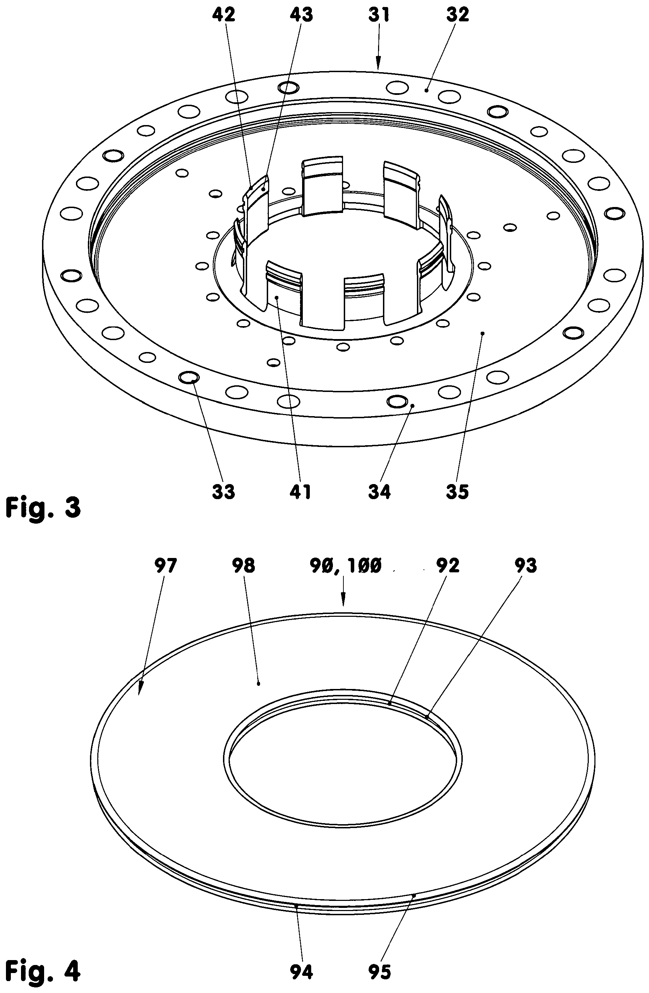

In der Figur 3 ist ein Deckelteil (31) dargestellt. Das Deckelteil (31) ist ähnlich aufgebaut wie das Bodenteil (51).

Beispielsweise haben das Bodenteil (51) und das Deckelteil (31) die gleichen äußeren Abmessungen. Die Außenwandung (34) des Deckelteils (31) ist im Ausführungsbeispiel ohne Verteilkanal (58) und ohne Einlaufbereich (64) ausgebildet. Das Deckelteil (31) trägt in seinem an die Stangenausnehmung (22) angrenzenden Bereich die zweiten Klemmkontaktplatten (41). Diese zweiten Klemmkontaktplatten (41) sind mit der Decke (35) des Deckelteils (31) verbunden. Sie kragen in dieser Darstellung in axialer Richtung (15) heraus. Bei montierter Klemm- und/oder Bremsvorrichtung (10) ragen sie in Richtung des Bodenteils (51).

Die Figur 4 zeigt einen Kolben (90; 100). Die Brems- und/oder Klemmvorrichtung (10) dieses Ausführungsbeispiels hat zwei Kolben (90; 100), deren jeweilige Unterseiten (91; 101) zueinander zeigen, vgl. die Figuren 8 und 9. Beide Kolben (90, 100) sind im Ausführungsbeispiel identisch ausgebildet. Der einzelne Kolben (90; 100) ist ein Ringkolben (90; 100). Sein Außendurchmesser beträgt beispielsweise das 2,25-fache seines Innendurchmessers. Der Innendurchmesser ist z.B. um 9,6 % größer als der Nenndurchmesser der Brems- und/oder Klemmvorrichtung (10). Dieser Innendurchmesser des Ringkolbens (90; 100) ist mindestens um 5 % größer als der Nenndurchmesser der Brems- und/oder Klemmvorrichtung (10). Die koaxial zur Längsachse (14) ausgebildete Innenfläche (92) hat eine Ringnut (93) zur Aufnahme eines Dichtrings (108), vgl. Figur 8. Eine weitere Dichtringnut (94) zur Aufnahme eines Außendichtrings (109) ist in der Mantelfläche (95) des Ringkolbens (90; 100) eingeprägt.

Die Kolbenunterseite (91; 101) hat einen umlaufenden Ring (96). Dieser hat z.B. eine in der axialen Richtung (15) orientierte Länge von einem Zehntel Millimeter und eine in radialer Richtung orientierte Breite von 2,5 Millimetern.

Die Kolbenoberseite (97) hat eine umlaufende, als Wölbung ausgebildete Erhebung (98). Der Wölbungsradius der Erhebung (98) beträgt im Ausführungsbeispiel das 2,4-fache des Nenndurchmessers der Brems- und/oder Klemmvorrichtung (10). Die Wölbungsmittellinie liegt auf dem mittleren Durchmesser des Ringkolbens (90; 100). Der Scheitel (99) der Erhebung (98) ist im Ausführungsbeispiel um 2 % des Nenndurchmessers in der Längsrichtung (15) versetzt zu seinen Rändern. Die Erhebung (98) kann auch als umlaufender Steg ausgebildet sein. Sie ist koaxial zur Innenfläche (92) des Kolbens (90; 100) angeordnet.

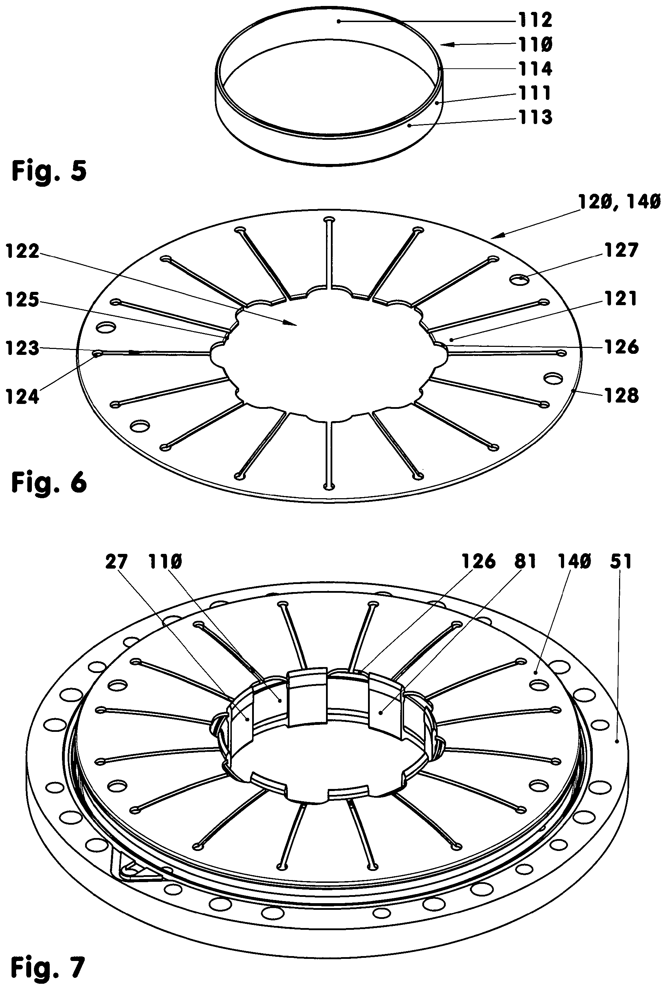

In der Figur 5 ist ein Innenring (110) dargestellt. Der Innenring (110) dieses Ausführungsbeispiels hat ein konstantes Querschnittsprofil. Seine zylindermantelförmig ausgebildete Außenfläche (111) und seine Innenfläche (112) sind koaxial zur Längsachse (14) ausgebildet. Der Innendurchmesser des Innenrings (110) ist im Ausführungsbeispiel um 5 % größer als der Nenndurchmesser der Brems- und/oder Klemmvorrichtung (10). Der Außendurchmesser ist im Ausführungsbeispiel um 9,2 % größer als der Nenndurchmesser. Die Länge des Innenrings (110) in der axialen Richtung (15) beträgt beispielsweise 18 % des Nenndurchmessers. Bei montierter Brems- und/oder Klemmvorrichtung (10) umgibt der Innenring (110) die Innenwandung (27). Beispielsweise ist er innerhalb des Gehäuses (21) in den axialen Richtungen (15) schwimmend gelagert.

Die Figur 6 zeigt ein Scheibenelement (120; 140). Die in diesem Ausführungsbeispiel offenbarte Brems- und/oder Klemmvorrichtung (10) hat mindestens zwei Scheibenelemente (120; 140). Ein erstes Scheibenelement (120) ist im Bodenteil (51) zwischen dem Boden (71) und dem ersten Ringkolben (90) gelagert. Das zweite Scheibenelement (140) liegt im Deckelteil (31) zwischen dem zweiten Ringkolben (100) und der Decke (35). Beide Scheibenelemente (120, 140) sind identisch ausgebildet. Im Ausführungsbeispiel sind beide Scheibenelemente (120, 140) im nicht eingebauten Zustand planparallele, ebene Scheiben. Das einzelne Scheibenelement (120, 140) kann tellerfederartig gewölbt sein. Es ist auch denkbar, jeweils mehrere Scheibenelemente (120, 140) übereinander anzuordnen.

Der Außendurchmesser des z.B. ringförmig ausgebildeten Scheibenelements (120, 140) beträgt im Ausführungsbeispiel das 2,44-fache des Nenndurchmessers der Brems- und/oder Klemmvorrichtung (10). Der Innendurchmesser des Scheibenelements (120, 140) ist beispielsweise um 3,5 % größer als der Nenndurchmesser. Die Dicke des Scheibenelements (120, 140) beträgt z.B. 1,8 % des Nenndurchmessers der Brems- und/oder Klemmvorrichtung (10). Das einzelne Scheibenelement (120, 140) kann auch streifenförmig ausgebildet sein. Es hat dann beispielsweise zwei einander gegenüberliegende kreisabschnittsförmige Umfangsabschnitte und einen zentralen Durchbruch (122). Das einzelne Scheibenelement (120, 140) ist aus einem metallischen Werkstoff, z.B. Stahl, Federstahl, Aluminium, etc. hergestellt.

Das einzelne Scheibenelement (120; 140) hat eine Vielzahl von Scheibensegmenten (121). Im Ausführungsbeispiel beträgt die Anzahl der Scheibensegmente (121) eines Scheibenelements (120; 140) das Doppelte der Anzahl der ersten Klemmkontaktplatten (81) bzw. das Doppelte der Anzahl der zweiten Klemmkontaktplatten (41). Die einzelnen Scheibensegmente (121) sind jeweils durch einen an den zentralen Durchbruch (122) angrenzende Schlitz (123) voneinander getrennt. Der einzelne Schlitz (123) hat beispielsweise eine Länge von 62,5 % des Nenndurchmessers und eine Breite von 2,4 % des Nenndurchmessers. Der einzelne Schlitz (123) endet in jeweils einer Entlastungsbohrung (124).

Jedes Scheibensegment (121) hat eine an den zentralen Durchbruch (122) angrenzende Segmentdruckzone (125) und eine von der Hüllkontur des zentralen Durchbruchs (122) beabstandete Freifläche (126). Im Ausführungsbeispiel beträgt die Länge der Segmentdruckzone (125) in der Umfangsrichtung weniger als die Hälfte der gedachten Sektorenbogenlänge des Scheibensegments (121) am zentralen Durchbruch (122). Diese Bogenlänge ist kürzer als die Hälfte des Abstands zweier benachbarter Schlitze (123). Die Freifläche (126) ist hierbei beispielsweise mittels einer Viertelellipse begrenzt. Die einzelnen Scheibensegmente (121) sind so angeordnet, dass jeweils zwei Segmentdruckzonen (125) und jeweils zwei Freiflächen (126) nebeneinander liegen. Weitere Durchbrüche (127) sind im äußeren Bereich der Scheibenelemente (120; 140) angeordnet.

In der zusammengebauten Brems- und/oder Klemmvorrichtung (10) liegt das erste Scheibenelement (120) mit seiner äußeren Umfangsfläche (128) im Scheibenaufnahmebereich (61) der Außenwandung (52) des Bodenteils (51). Die Segmentdruckzonen (125) sitzen in den Einstecknuten (86) der zweiten Klemmkontaktplatten (41). Hierbei liegen jeweils zwei Segmentdruckzonen (125) an einer Klemmkontaktplatte (41) an. Beispielsweise ist die radiale Lage des Scheibenelements (120) relativ zu den zweiten Klemmkontaktplatten (41) zentriert, z.B. mittels eines in einer Einstecknut (86) angeordneten Zentrierstegs. Die Freiflächen (126) liegen jeweils außerhalb der ersten Klemmkontaktplatten (41), sodass sie diese nicht berühren.

Das zweite Scheibenelement (140) ist analog hierzu im Deckelteil (31) angeordnet. Die Segmentdruckzonen (125) des zweiten Scheibenelements (140) liegen hierbei an den ersten Klemmkontaktplatten (81) an.

Der Innenring (110), die Außenwandungen (34, 52) des Gehäuses (21) und die beiden Kolben (90, 100) begrenzen einen Druckraum (16). Dieser Druckraum (16) ist mit dem hydraulischen oder pneumatischen Anschluss (13) verbunden. Die beiden Kolben (90, 100) sind jeweils mittels der Dichtringe (108) am Innenring (110) und mittels der Dichtringe (109) an den Außenwandungen (34, 52) abgedichtet.

Bei nicht druckbeaufschlagtem Druckraum (16) nimmt die Brems- und/oder Klemmvorrichtung (10) die in der Figur 8 dargestellte Klemmstellung (12) ein. Die Kolben (90, 100) stehen mit geringem Abstand zueinander nahe der Trennfuge (28) zwischen dem Bodenteil (51) und dem Deckelteil (31). Beispielsweise liegen die beiden Kolben (90, 100) mit den umlaufenden Ringen (96) aneinander an. Der Druckraum (16) hat sein minimales Volumen. Die Scheibenelemente (120, 140) liegen in ihrer z.B. ebenen Ausgangslage an den Erhebungen (98) der Kolben (90, 100) an. In dieser Position belasten die Scheibenelemente (120, 140) die Klemmkontaktplatten (41, 81). Die Klemmkontaktplatten (41, 81) sind mittels der Scheibenelemente (120, 140) zur Längsachse (14) hin elastisch verformt. Beispielsweise bilden die Klemmarme (84) eine Biegezone der Klemmkontaktplatten (41, 81). Diese Biegezone kann auch auf einen definierten Bereich der Klemmarme (84) beschränkt sein, beispielsweise auf einen Bereich verminderter Querschnittsfläche. Es ist auch denkbar, die Biegezone gelenkartig auszubilden.

Sowohl die ersten Klemmkontaktplatten (81) als auch die zweiten Klemmkontaktplatten (41) ragen in dieser Klemmstellung (12) beispielsweise um den gleichen Betrag in die Stangenaufnahme (22). Eine von der Brems- und/oder Klemmvorrichtung (10) umgriffene Stange wird damit stabilisierend umgriffen. Die Klemmkontaktzonen (43, 83) liegen großflächig an der Stange an. Die Position der Brems- und/oder Klemmvorrichtung (10) relativ zur Stange kann damit mit hoher Genauigkeit gehalten werden. Hierbei ermöglichen die ersten und die zweiten Klemmkontaktplatten (41, 81) eine hohe Klemmkraft.

Um die Brems- und/oder Klemmvorrichtung (10) relativ zur Stange zu verschieben, wird die Brems- und/oder Klemmvorrichtung (10) gelüftet, vgl. Figur 9. Hierzu wird über den z.B. pneumatischen Anschluss (13) Druckluft in den Druckraum (16) gefördert. Die beiden Kolben (90, 100) werden auseinandergedrückt. Der Druckraum (16) vergrößert sich. Der Hub des einzelnen Kolbens (90; 100) in axialer Richtung (15) beträgt beispielsweise 2 % des Nenndurchmessers. Der in Richtung des Bodens (71) verdrängte erste Kolben (90) belastet mit seiner Erhebung (98) das erste Scheibenelement (120). Das erste Scheibenelement (120) wird hierbei sowohl am Scheibenaufnahmebereich (61) der Außenwandung (52) als auch in den Einstecknuten (86) der Klemmkontaktplatten (41) gehalten. Das zweite Scheibenelement (140) wird analog hierzu im Deckelteil (31) und an den ersten Klemmkontaktplatten (81) gehalten. Die Belastung des einzelnen Scheibenelements (120, 140) mittels des Kolbens (90, 100) führt zu einer elastischen Verformung des Scheibenelements (120, 140). Das Scheibenelement (120, 140) schmiegt sich zumindest im Bereich des Scheitels (99) an die Erhebung (98) an. Die Segmentdruckzonen (125) wandern radial nach außen. Der radiale Hub der Segmentdruckzonen (125) beträgt beispielsweise 1,6 % des Nenndurchmessers. Die Klemmkontaktplatten (41, 81) werden entlastet. Mit zunehmender Verformung des einzelnen Scheibenelements (120; 140) nimmt die Belastung der jeweils zugeordneten Klemmkontaktplatte (41; 81) ab. Unter elastischer Rückverformung nehmen sie ihre in den Figuren 2 und 3 dargestellte Ausgangslage ein. Die Brems- und/oder Klemmvorrichtung (10) ist gelüftet.

Die Figur 9 zeigt die Brems- und/oder Klemmvorrichtung (10) in gelüfteter Stellung (11). Der Druckraum (16) hat sein maximales Volumen. Die Kolben (90, 100) begrenzen auch in dieser gelüfteten Stellung (11) den Druckraum (16). Der erste Kolben (90) steht in seiner unteren Endlage. Das erste Scheibenelement (120) ist in Richtung des Bodens (71) gewölbt. Der zweite Kolben (100) steht in seiner oberen Endlage. Das zweite Scheibenelement (140) ist in Richtung der Decke (35) verformt. Bei belastetem Scheibenelement (41; 81) sind die jeweils zugeordneten Innenwandabschnitte (41; 81) entlastet. Eine in der Stangenaufnahme (22) sitzende Stange ist bei gelüfteter Brems- und/oder Klemmvorrichtung (10) beispielsweise frei verschiebbar.

Zum erneuten Bremsen und/oder Klemmen wird der z.B. pneumatische Druck im Druckraum (16) vermindert. Hierzu kann der Innendruck des Druckraums (16) mittels eines Ablassventils an den Umgebungsdruck angepasst werden. Es ist auch denkbar, z.B. mittels einer Absaugpumpe den Druck im Druckraum (16) zu vermindern. Beispielsweise kann das jeweilige Scheibenelement (120; 140) am zugeordneten Kolben (90; 100) fixiert sein. Auch können das Scheibenelement (120; 140) und der Kolben (90; 100) von der dem Druckraum (16) abgewandten Seite aus druckbeaufschlagt werden. Die beiden Kolben (90, 100) verfahren jeweils in der axialen Richtung (15) aufeinander zu.

Die beiden Scheibenelemente (120, 140) werden entlastet. Sie verformen sich elastisch in ihre z.B. plane Ausgangslage zurück. Hierbei verdrängen die Scheibenelemente (120, 140) die jeweiligen Klemmkontaktplatten (41, 81) in Richtung der in der Figur 8 dargestellten Klemmstellung (12). Mit abnehmender Verformung des einzelnen Scheibenelements (120; 140) nimmt die Verformung der zugeordneten Innenwandabschnitte (41; 81) zu.

Der Klemmhub der einzelnen Klemmkontaktplatte (41; 81) im Bereich der Klemmkontaktzone (43; 83) entspricht beispielsweise dem Radialhub der Segmentdruckzonen (125). Die Rückverformung der Scheibenelemente (120, 140) und die elastische Verformung der Klemmkontaktplatten (41, 81) erfolgt z.B. gleichzeitig mit dem Verfahren der Kolben (90, 100). Die Brems- und/oder Klemmvorrichtung (10) reagiert damit unmittelbar auf eine Druckänderung im Druckraum (16). Im eingebauten Zustand werden bei unbelastetem Scheibenelement (120; 140) die Innenwandabschnitte (41; 81) an die Stange angepresst.

Die Figur 10 zeigt die Schnittdarstellung einer Variante einer Brems- und/oder Klemmvorrichtung (10). Diese Brems- und/oder Klemmvorrichtung (10) hat beispielsweise den gleichen Nenndurchmesser der Stangenaufnahme (22) und die gleichen äußeren Abmessungen wie die im vorhergehenden Ausführungsbeispiel beschriebene Brems- und/oder Klemmvorrichtung (10).

In diesem Ausführungsbeispiel ist das Bodenteil (51) ähnlich ausgebildet wie das in der Figur 2 dargestellte Bodenteil (51). Der Innenring (110) ist in der Darstellung der Figur 10 an das Bodenteil (51) angeformt. Der Innenring (110) kann jedoch auch in diesem Ausführungsbeispiel in axialer Richtung (15) schwimmend gelagert sein. Er kann auch am Bodenteil (51) angeschraubt sein. Der Innendurchmesser und der Außendurchmesser dieses Innenrings (110) entsprechen den Abmessungen des in der Figur 5 dargestellten Innenrings (110). Gegebenenfalls kann der Innenring (110) im Bereich des Bodens (71) dicker ausgebildet sein als im Kolbenführungsbereich (113). Beispielsweise bildet der Innenring (110) dann einen Hubanschlag.

Die am Bodenteil (51) angeordneten Klemmkontaktplatten (81) sind so ausgebildet, wie oben beschrieben. Anstatt der z.B. acht Klemmkontaktplatten (81) des ersten Ausführungsbeispiels kann diese Brems- und/oder Klemmvorrichtung (10) mindestens zwei am Bodenteil (51) angeordnete Klemmkontaktplatten (81) aufweisen.

Das Deckelteil (31) ist ähnlich dem in der Figur 3 dargestellten Deckelteil (31) ausgebildet. Es hat jedoch in der Darstellung der Figur 10 keine Klemmkontaktplatten (41). In diesem Ausführungsbeispiel können an den Stellen der deckelteilseitigen Klemmkontaktplatten (41) starre Zungen angeordnet sein.

Im Deckelteil (31) ist ein Kolben (100) in die axialen Richtungen (15) verschiebbar gelagert. Dieser Kolben (100) ist so ausgebildet wie der in der Figur 4 dargestellte Kolben (100). Das in diesem Ausführungsbeispiel eingesetzte Scheibenelement (140) entspricht beispielsweise dem in der Figur 6 dargestellten Scheibenelement (140).

Beim Zusammenbau wird beispielsweise zunächst das mindestens eine Scheibenelement (140) in das Deckelteil (31) eingelegt. Gegebenenfalls kann das Scheibenelement (140) gegen Verdrehen fixiert werden. Anschließend wird der mit den Dichtelementen (108, 109) versehene Kolben (100) in das Deckelteil (31) so eingesetzt, dass die Erhebung (98) zum Scheibenelement (140) zeigt. Das Bodenteil (51) und der Innenring (110) werden anschließend beispielsweise so eingesetzt, dass die Segmentdruckzonen (125) zwischen den Klemmkontaktplatten (81) liegen. Nach dem Aufsetzen des Bodenteils (51) wird dieses z.B. um eine halbe Teilung der Klemmkontaktplatten (81) um die Längsachse (14) relativ zum Scheibenelement (140) geschwenkt. Die Segmentdruckzonen (125) liegen nun hinter den Klemmkontaktplatten (81). Die Freiflächen (126) liegen zwischen den Klemmkontaktplatten (81). Das Bodenteil (51) und das Deckelteil (31) können nun miteinander gefügt werden. Auch eine andere Reihenfolge des Zusammenbaus ist denkbar.

Bei entlastetem Kolben (100) belastet das im Deckelteil (31) gelagerte Scheibenelement (140) die im Bodenteil (51) angeordneten Klemmkontaktplatten (81) radial zur Längsachse (14) hin. Der Kolben (100) kann hierbei an einem Hubanschlag anliegen. Die Brems- und/oder Klemmvorrichtung (10) kann die Relativbewegung einer Stange verzögern oder die Stange relativ zur Brems- und/oder Klemmvorrichtung (10) fixieren.

Zum Lüften der Brems- und/oder Klemmvorrichtung (10) wird der Kolben (100) z.B. mittels Druckluft in Richtung des Scheibenelements (140) verfahren. Das Scheibenelement (140) wird elastisch verformt und entlastet die Klemmkontaktplatten (81). Die selbstrückstellenden Klemmkontaktplatten (81) nehmen ihre unbelastete Ausgangslage ein.

Die in der Figur 10 dargestellte Brems- und/oder Klemmvorrichtung (10) kann auch mit im Deckelteil (31) angeordneten Klemmkontaktplatten (41) ausgebildet sein. Der Kolben (90) und das Scheibenelement (120) sind dann im Bodenteil (51) gelagert.

In den dargestellten Ausführungsbeispielen sind die bodenteilseitigen Innenwandabschnitte (81) Teile des Bodenteils (51) und die deckelteilseitigen Innenwandabschnitte (41) Teile des Deckelteils (31). Es ist aber auch denkbar, die Innenwandabschnitte (41; 81) in z.B. federbelasteten Gelenken am Bodenteil (51) und/oder am Deckelteil (31) zu lagern. Die sich bei Belastung des Scheibenelements (120; 140) oder der Scheibenelemente (120, 140) mittels des oder der Kolben (90, 100) entlastende Gelenkfeder stellt dann die Innenwandabschnitte (41, 81) in die entlastete Ausgangsstellung zurück.

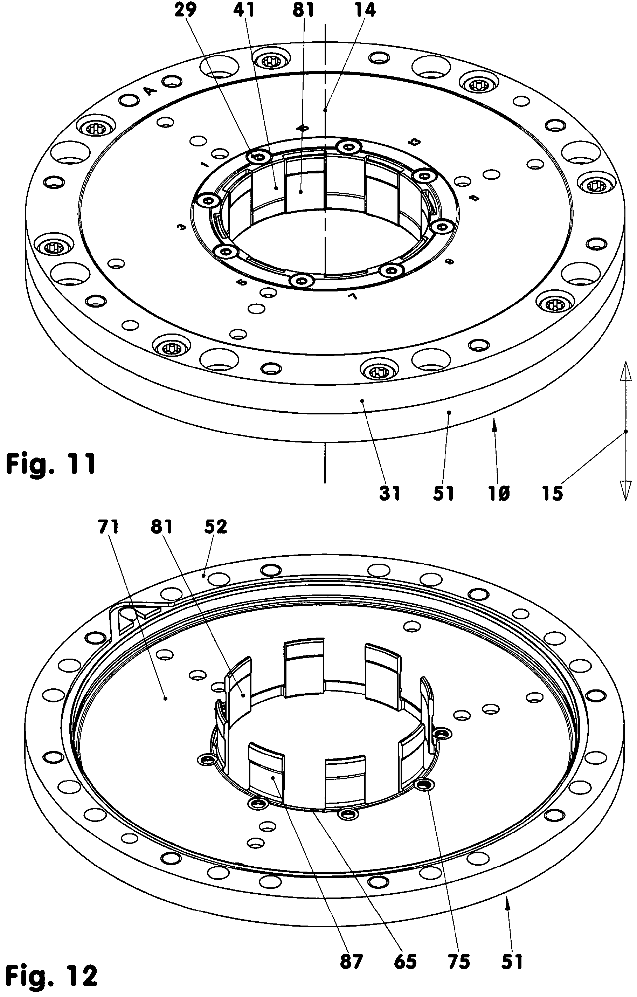

Die Figuren 11 - 18 zeigen ein weiteres Beispiel einer Brems- und/oder Klemmvorrichtung (10). Der Nenndurchmesser der Stangenaufnahme (22) und die äußeren Abmessungen stimmen beispielsweise mit den im Zusammenhang mit den vorhergehenden Ausführungsbeispielen beschriebenen Brems- und/oder Klemmvorrichtungen (10) überein.

Das Gehäuse (21) der Brems- und/oder Klemmvorrichtung (10) weist auch in dieser Ausführungsform ein Bodenteil (51) und ein mit dem Bodenteil (51) gefügtes Deckelteil (31) auf. Hierbei umfasst das Bodenteil (51) die ersten Innenwandabschnitte (81). Die ersten Innenwandabschnitte (81) sind auch in diesem Ausführungsbeispiel als Klemmkontaktplatten (81) ausgebildet. Im Boden (71) sind im Bereich der ersten Klemmkontaktplatten (81) Durchbrüche (75) angeordnet. Diese liegen beispielsweise im Bereich der Anbindung der einzelnen Klemmkontaktplatte (81) an den Boden (71). Die einzelne Klemmkontaktplatte (81) hat an ihre Außenseite (87) keine Einstecknut (86).

Das Deckelteil (31) umfasst die zweiten, als Klemmkontaktplatten (41) ausgebildeten Innenwandabschnitte (41). Auch das Deckelteil (31) weist Durchbrüche (36) auf. Diese sind im Bereich der Anbindung der zweiten Klemmkontaktplatten (41) an die Decke (35) angeordnet.

Der einzelne Kolben (90; 100) ist ähnlich ausgebildet wie der in der Figur 4 dargestellte Kolben (90; 100). Sein Innendurchmesser ist in diesem Ausführungsbeispiel um 25 % größer als der Nenndurchmesser.

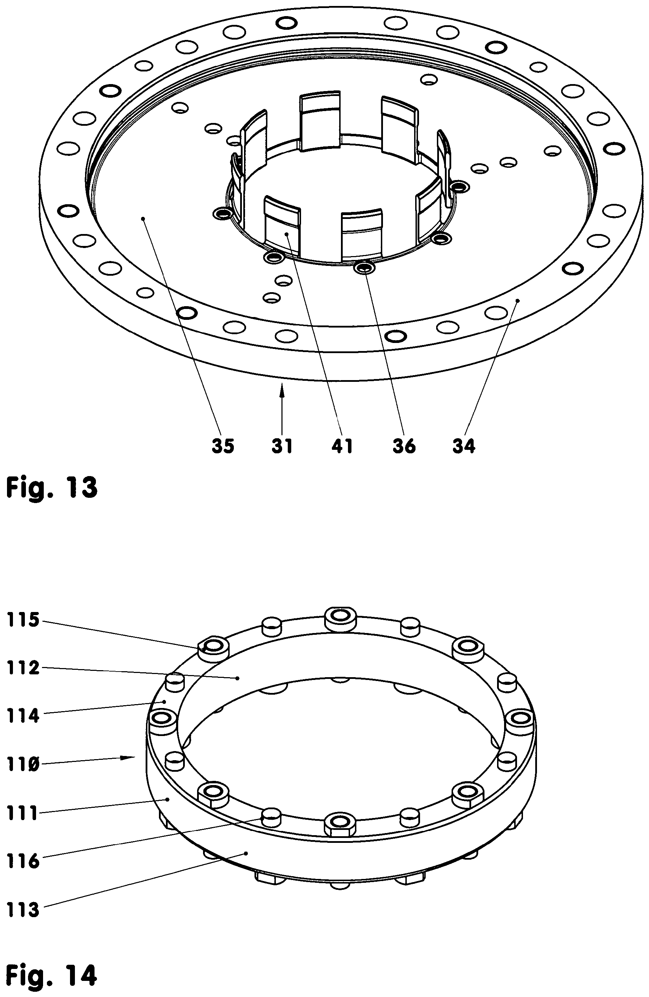

Die Figur 14 zeigt den Innenring (110) dieses Ausführungsbeispiels. Bei zusammengebauter Brems- und/oder Klemmvorrichtung (10) umgibt der Innenring (110) die Innenwandung (27) des Gehäuses (21). Der Innenring (110) ist zylindermantelförmig aufgebaut. Seine Außenfläche (111) bildet einen inneren Kolbenführungsbereich (113). Auf den Stirnseiten (114) sind Gewindeeinsätze (115) angeordnet. Gegebenenfalls kann jeweils ein Abstandshalter (116) an der dem Gewindeeinsatz (115) abgewandten Stirnseite (114) des Innenrings (110) angeordnet sein.

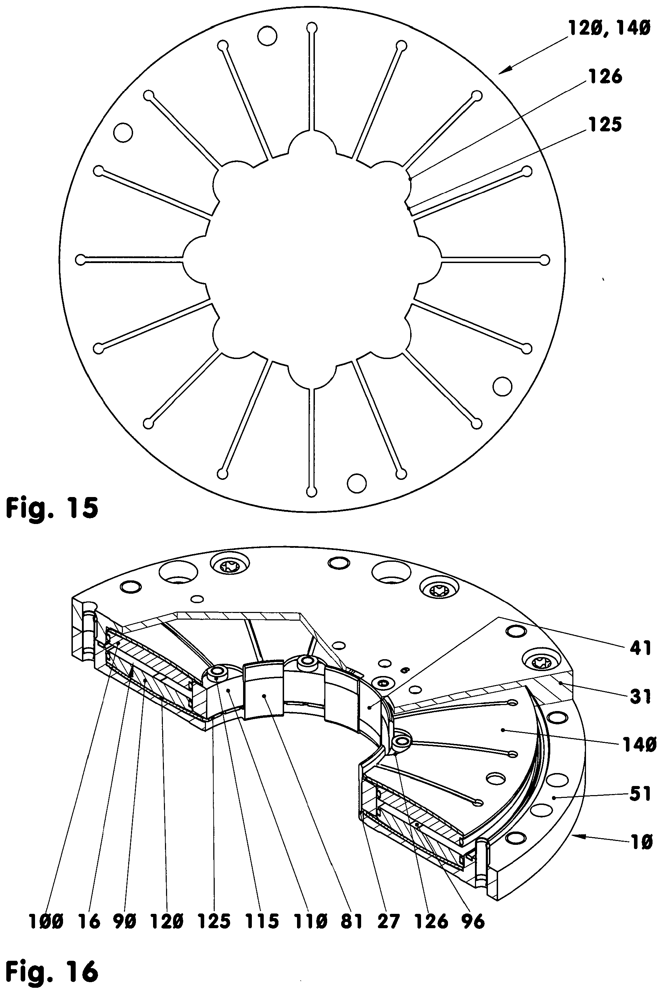

In der Figur 15 ist ein Scheibenelement (120; 140) dargestellt. Die Anzahl der Scheibensegmente (121) des einzelnen Scheibenelements (120; 140) entspricht der doppelten Anzahl der ersten Klemmkontaktplatten (81) oder der zweiten Klemmkontaktplatten (41). Die Scheibensegmente (121) haben viertelkreisförmige Freiflächen (126). Die Bogenlänge der einzelnen Segmentdruckzone (125) beträgt beispielsweise 40 % eines vom Scheibensegments (120; 140) begrenzten Sektors. Auch in diesem Ausführungsbeispiel können mehrere Scheibenelemente (120; 140) übereinander angeordnet werden.

Die Figur 16 zeigt einen isometrischen Schnitt der Brems- und/oder Klemmvorrichtung (10). In dieser Darstellung ist das Deckelteil (31) bereichsweise ausgebrochen. Auch in diesem Ausführungsbeispiel bilden die ersten Klemmkontaktplatten (81) und die zweiten Klemmkontaktplatten (41) die Innenwandung (27) des Gehäuses (21).

In der zusammengebauten Brems- und/oder Klemmvorrichtung (10) dieses Ausführungsbeispiels liegen im Bodenteil (51) der erste Kolben (90) und das erste Scheibenelement (120). Die Segmentdruckzonen (125) des ersten Scheibenelements (120) zeigen in Richtung der zweiten Klemmkontaktplatten (41). In der dargestellten Lage belastet der erste Kolben (90) das erste Scheibenelement (120). Die in Richtung des Bodenteils (51) ragenden zweiten Klemmkontaktplatten (41) sind entlastet. Beispielsweise liegen die Segmentdruckzonen (125) an der Außenseite der Klemmkontaktplatten (41) an.

Im Deckelteil (31) belastet der zweite Kolben (100) das zweite Scheibenelement (140). Der zweite Kolben (100) ist hierbei sowohl an der Außenwandung (34) als auch am Innenring (110) abgedichtet. Die ersten Klemmkontaktplatten (81) sind entlastet. Der erste Kolben (90) und der zweite Kolben (100) begrenzen auch in diesem Ausführungsbeispiel den Druckraum (16).

Der Innenring (110) ist in diesem Ausführungsbeispiel sowohl mit dem Deckelteil (31) als auch mit dem Bodenteil (51) verschraubt. Hierzu sitzen als Verbindungsmittel (29) z.B. Innensechskantschrauben (29) in den Durchbrüchen (36; 75). Der Innenring (110) kann auch unbefestigt sein. Hierfür kann beispielsweise die axiale Vorspannung des Gehäuses (21) entsprechend ausgelegt sein. Die Gewindeeinsätze (115) sitzen in den von den Freiflächen (126) umgebenen Bereichen.

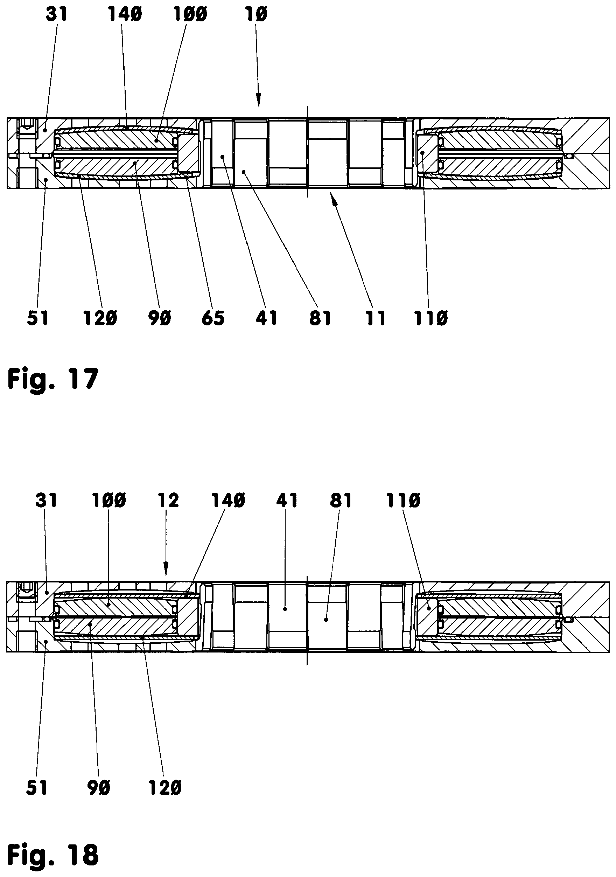

In der Figur 17 ist ein Querschnitt der Brems- und/oder Klemmvorrichtung (10) der Figur 11 in der gelüfteten Stellung (11) dargestellt. Der Druckraum (16) ist druckbeaufschlagt. Der erste Kolben (90) liegt in seiner unteren Endlage. Das erste Scheibenelement (120) ist am Bodenteil (51) außen im Scheibenaufnahmebereich (61) und innen an einer Scheibenelementanlage (65) abgestützt. Das erste Scheibenelement (120) ist zwischen diesen beiden Gegenhaltern (61, 65) verformt. Die zweiten Klemmkontaktplatten (41) sind entlastet.

Der zweite Kolben (100) liegt in seiner oberen Endlage. Das verformte zweite Scheibenelement (140) hat die ersten Klemmkontaktplatten (81) entlastet. Diese Klemmkontaktplatten (81) stehen in ihrer in der Figur 12 dargestellten Ausgangslage.

Die Figur 18 zeigt diese Brems- und/oder Klemmvorrichtung (10) in der Klemmstellung (12). Der Druckraum (16) ist entlastet. Beide Kolben (90, 100) sind in Richtung der Trennfuge (28) zwischen dem Bodenteil (51) und dem Deckelteil (31) verfahren. Die Scheibenelemente (120, 140) sind entlastet und haben sich elastisch in ihre z.B. plane Ausgangslage zurückverformt. Hierbei haben sie die Innenwandung (27) elastisch verformt. Sowohl sämtliche ersten Klemmkontaktplatten (81) als auch sämtliche zweiten Klemmkontaktplatten (41) sind in Richtung zur Längsachse (14) hin verformt. Um die Klemmung erneut zu lösen, kann der Druckraum (16) wieder mit z.B. pneumatischen Druck beaufschlagt werden.

Gegebenenfalls kann zwischen dem ersten Scheibenelement (120) und dem Boden (71) und/oder zwischen dem zweiten Scheibenelement (140) und der Decke (35) ein weiterer Druckraum angeordnet sein. Dieser hat dann beispielsweise einen weiteren, am Scheibenelement (120; 140) anlegbaren Kolben. Dieser weitere Druckraum ist oder diese weiteren Druckräume sind dann beispielsweise gegenläufig zum ersten Druckraum (16) druckbeaufschlagbar. Damit kann das einzelne Scheibenelement (120; 140) z.B. zum reaktionsschnellen Klemmen mittels Unterdruck im ersten Druckraum (16) und Überdruck in den weiteren Druckräumen beaufschlagt werden.

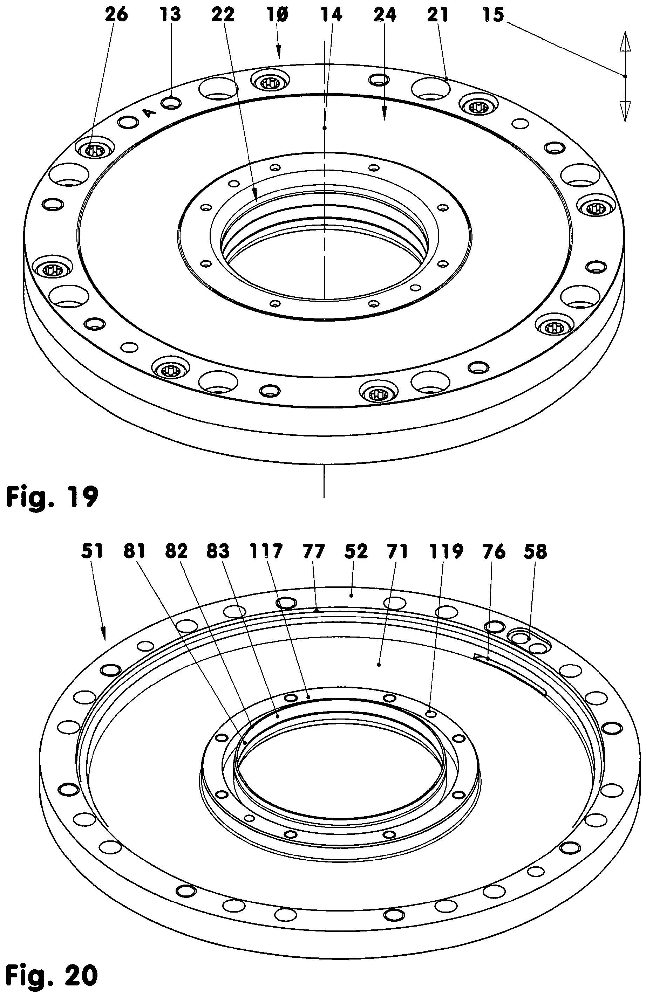

Die Figuren 19 - 25 zeigen eine weitere Variante einer Brems- und/oder Klemmvorrichtung (10). Diese hat die gleichen äußeren Abmessungen wie die in den vorigen Ausführungsbeispielen dargestellten Brems- und/oder Klemmvorrichtungen (10). Ein z.B. pneumatischer Anschluss (13) ist an der Oberseite (24) des Gehäuses (21) angeordnet.

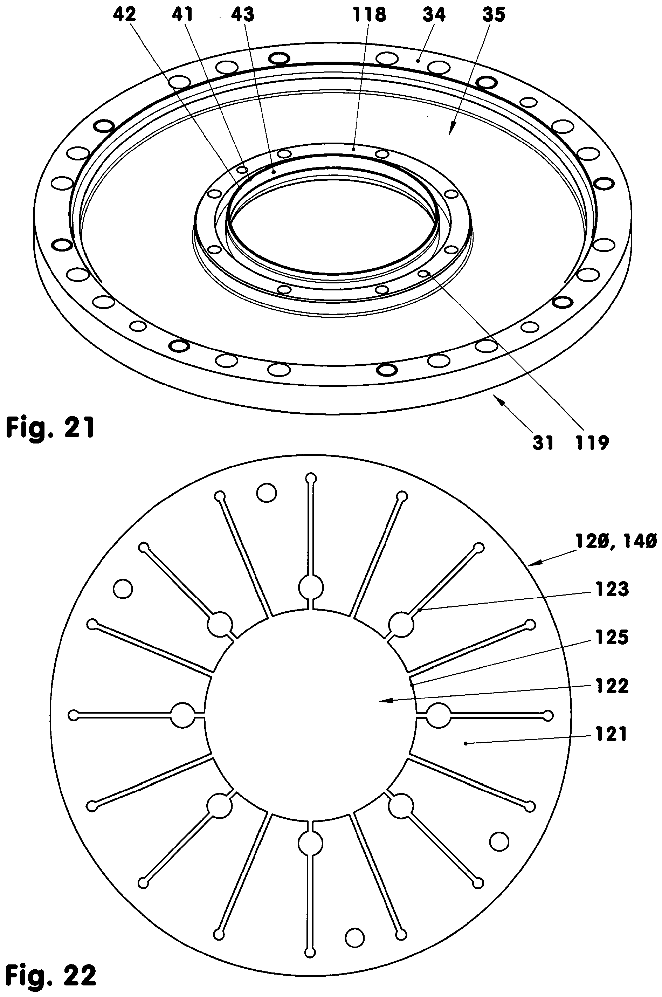

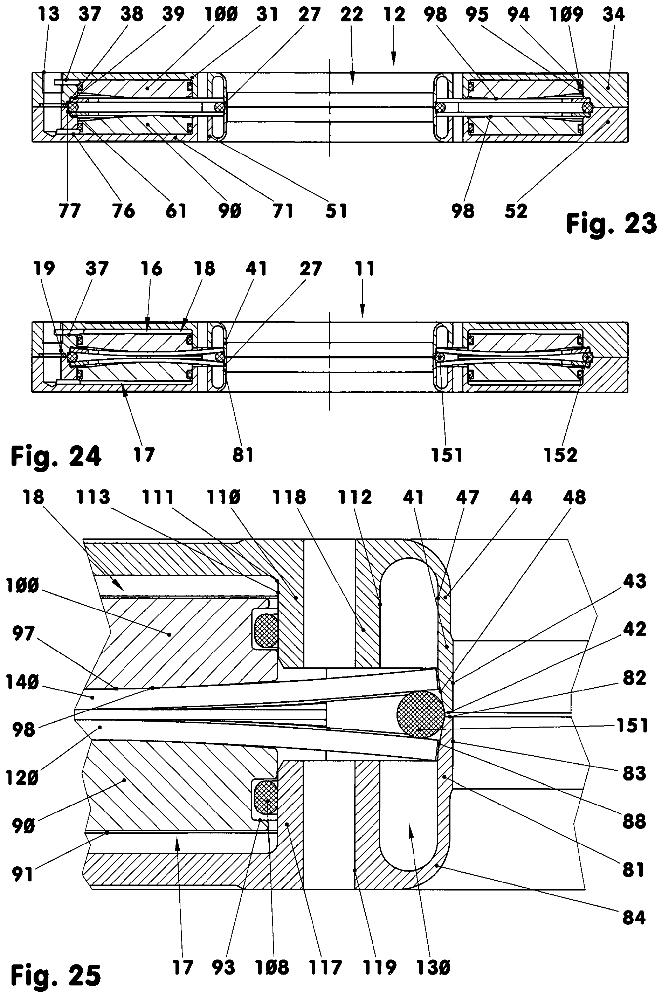

Das Gehäuse (21) weist das in der Figur 20 dargestellte Bodenteil (51) und das in der Figur 21 gezeigte Deckelteil (31) auf. In der montierten Brems- und/oder Klemmvorrichtung (10) sind die beiden Teile mittels der Verbindungsschrauben (26) gefügt. Der Pneumatikanschluss (13) mündet in einen zweiteiligen Druckraum (16). Ein erster Druckraumbereich (17) legt bei montierter Brems- und/oder Klemmvorrichtung (10) im Bodenteil (51) zwischen dem Boden (71) und dem ersten Kolben (90), vgl. Figuren 24 und 25. Ein zweiter Druckraumbereich (18) liegt im Deckelteil (31) zwischen der Decke (35) und dem zweiten Kolben (100). Die beiden Druckraumbereiche (17, 18) sind mittels eines in den Außenwandungen (34, 52) angeordneten Verbindungskanals (19) miteinander verbunden. Im Bodenteil (51) mündet der Verbindungskanal (19) in einer sich deltaförmig aufweitenden Bodendüse (76). Eine z.B. geometrisch identisch ausgebildete Deckeldüse (37) ist im Deckelteil (31) ausgebildet.

Der Innenring (110) der Brems- und/oder Klemmvorrichtung (10) ist in diesem Ausführungsbeispiel zweiteilig ausgebildet. Er weist zwei zueinander kongruente Stützringe (117, 118) auf. Ein erster Stützring (117) ist im Bodenteil (51) ausgebildet. Beispielsweise ist er am Boden (71) angeformt. Der erste Stützring (117) kann jedoch auch am Bodenteil (81) befestigt sein. Der zweite Stützring (118) ist im Deckelteil (31) ausgebildet oder befestigt. Der Innendurchmesser des einzelnen Stützrings (117; 118) ist um 14 % größer als der Nenndurchmesser der Brems- und/oder Klemmvorrichtung (10). Der Außendurchmesser des einzelnen Stützrings (117; 118) ist in diesem Ausführungsbeispiel um 34 % größer als der Nenndurchmesser der Brems- und/oder Klemmvorrichtung (10). Die in der Längsrichtung (15) orientierte Länge des einzelnen Stützrings (117; 118) beträgt jeweils 12,5 % des Nenndurchmessers. Das freie Ende des jeweiligen Stützrings (117; 118) ist an der Außenseite jeweils angefast. In den Darstellungen der Figuren 23 - 25 durchdringen Zentrierbolzenaufnahmen (119) den Innenring (110).

Die Innenwandung (27) der Brems- und/oder Klemmvorrichtung (10) hat zwei Innenwandabschnitte (41; 81). Beide Innenwandabschnitte (41, 81) sind ringförmig ausgebildet. Ein erster Innenwandabschnitt (81) ist Teil des Bodenteils (51). Ein zweiter Innenwandabschnitt (41) ist Teil des Deckelteils (31). Die in axialer Richtung (15) orientierte Länge des einzelnen Innenwandabschnitts (41; 81) beträgt in diesem Ausführungsbeispiel 16,8 % des Nenndurchmessers. Zwischen dem deckelteilseitigen Innenwandabschnitt (41) und dem bodenteilseitigen Innenwandabschnitt (81) besteht beispielsweise ein umlaufender Spalt einer Länge von 0,2 Millimeter. Dieser Spalt ist z.B. symmetrisch zur Trennfuge (28) ausgebildet.

Am seinem freien Ende (42, 82) hat der jeweilige Innenwandabschnitt (41; 81) eine Klemmkontaktzone (43; 83). Diese ist jeweils ringförmig ausgebildet. Die Dicke des jeweiligen Innenwandabschnitts (41, 81) im Bereich der Klemmkontaktzone (43; 83) beträgt im Ausführungsbeispiel 1,5 % des Nenndurchmessers. Der jeweilige Klemmarm (44, 84) verbindet die Klemmkontaktzone (43, 83) mit dem Innenring (110). Der Übergang ist im Ausführungsbeispiel bogenförmig ausgebildet. Die Dicke des Innenwandabschnitts (41; 81) im Bereich des Klemmarms (44, 84) beträgt beispielsweise 81 % der Dicke im Bereich der Klemmkontaktzone (43, 83).

An seiner Außenseite (47, 87) hat der jeweilige Innenwandabschnitt (41, 81) an seinem freien Ende (42, 82) eine Anpressfase (48, 88). Diese schließt mit der Klemmkontaktzone (43, 83) einen Winkel von 10 Grad ein. Die Anpressfase (48, 88) geht in einer Abrundung in den jeweiligen Klemmarm (44, 84) über.

Die zylindrischen Bereiche der Außenfläche (111) des Innenrings (110) bilden auch in diesem Ausführungsbeispiel Führungsflächen für die Kolben (90, 100). Die beiden Kolben (90; 100) sind so ausgebildet, wie im Zusammenhang mit den vorigen Ausführungsbeispielen beschrieben. An ihrer Innenfläche (92) haben sie eine Ringnut (93) zur Aufnahme eines Dichtrings (108). Mit diesem Dichtring (108) liegt der einzelne Kolben (90; 100) an der Außenfläche (111) des Innenrings (110) an. An seiner Mantelfläche (95) hat jeder der Kolben (90, 100) eine Dichtringnut (94) zur Aufnahme eines Außendichtrings (109). Mit diesem Außendichtring (109) ist der einzelne Kolben (90; 100) entlang der Außenwandung (34; 52) geführt.

Die beiden Kolben (90; 100) sind im Gehäuse (21) so angeordnet, dass ihre Erhebungen (98) zueinander zeigen. Die Unterseite (91) des bodenteilteilseitigen Kolbens (90) zeigt in Richtung des Bodens (71). Die Bodendüse (76) fluchtet mit dem Boden (71). Die Unterseite (101) des deckelteilseitigen Kolbens (100) ist in Richtung der Decke (35) orientiert. Die Deckeldüse (37) grenzt an die Decke (35) an.

Zwischen den beiden Kolben (90, 100) sind die Scheibenelemente (120, 140) angeordnet. Die beiden Scheibenelemente (120, 140) sind zueinander mittels zweier Ringe (151, 152) beabstandet. Beide Ringe (151, 152) bestehen beispielsweise aus demselben Werkstoff. Der Werkstoff kann ein Elastomer, ein metallischer Werkstoff, etc. sein. Sie haben die gleiche z.B. kreisförmige Querschnittsfläche. Die Dicke des einzelnen Rings (151; 152) beträgt im Ausführungsbeispiel drei Millimeter.

Ein erster Ring (151) wird im Folgenden als innerer Ring (151) bezeichnet. Sein mittlerer Durchmesser ist beispielsweise um 8 % größer als der Nenndurchmesser der Brems- und/oder Klemmvorrichtung (10). Dieser Ring (151) befindet sich in einem Ringraum (130), der von der Innenwandung (27) und dem Innenring (110) begrenzt wird.

Ein zweiter Ring (152) ist im Folgenden als äußerer Ring (152) bezeichnet. Der mittlere Durchmesser des äußeren Rings (152) beträgt im Ausführungsbeispiel das 2,5-fache des Nenndurchmessers. Der äußere Ring (152) liegt beispielsweise in einer Stufenausnehmung (38, 77) der Außenwandungen (34, 52).

Die Figur 22 zeigt ein Scheibenelement (120; 140) dieses Ausführungsbeispiels. Die beiden Scheibenelemente (120; 140) sind z.B. identisch ausgebildet. Sie haben im Ausführungsbeispiel eine Dicke von einem Millimeter. Der Außendurchmesser des einzelnen Scheibenelements (120; 140) beträgt z.B. das 2,53 fache des Nenndurchmessers. Der Innendurchmesser des unverformten Scheibenelements (120; 140) ist um 2,7 % größer als der Nenndurchmesser.

Das einzelne Scheibenelement (120; 140) hat auch in diesem Ausführungsbeispiel 16 Scheibensegmente (121), die mittels radialer Schlitze (123) voneinander beabstandet sind. Die jeweilige, zentral in Richtung der Längsachse (14) orientierte Segmentdruckzone (125) ist in diesem Ausführungsbeispiel ohne Freifläche ausgebildet.

Beim Zusammenbau der in den Figuren 19 - 25 dargestellten Brems- und/oder Klemmvorrichtung (10) wird beispielsweise zunächst der erste Kolben (90) in das Bodenteil (51) und der zweite Kolben (100) in das Deckelteil (31) eingelegt, sodass jeweils die Kolbenoberseite (97) sichtbar ist. Anschließend wird jeweils ein Scheibenelement (120; 140) in eine Scheibenauflage (39) und in den Scheibenaufnahmebereich (61) eingelegt. Vor dem Zusammenbau der beiden Teilbaugruppen werden die beiden Ringe (151, 152) eingelegt. Zum Abschluss wird das Bodenteil (51) mit dem Deckelteil (31) gefügt. Der Zusammenbau kann auch bei diesem Ausführungsbeispiel in anderer Reihenfolge erfolgen. Die Montage der Brems- und/oder Klemmvorrichtung (10) an einer Stange, erfolgt, wie im Zusammenhang mit den anderen Ausführungsbeispielen beschrieben.

Bei unbeaufschlagtem Druckraum (16) liegen die Kolben (90, 100) in ihren Endlagen. Beispielsweise kontaktiert der untere Kolben (90) mit einem beispielsweise umlaufenden Ring (96) den Boden (71) des Bodenteils (51). Der obere Kolben (100) liegt mit einem z.B. umlaufenden Ring (96) an der Decke (35) des Deckelteils (31) an. Die beiden Scheibenelemente (120, 140) kontaktieren beispielsweise die Kolbenoberseiten (97). Sie liegen z.B. parallel zueinander im Gehäuse (21). Hierbei belasten die Scheibenelemente (120, 140) die Innenwandabschnitte (41, 81), die elastisch in Richtung der Längsachse (14) radial nach innen verformt sind. Hierbei drückt das erste Scheibenelement (120) auf den jeweiligen ersten Innenwandabschnitt (81). Das zweite Scheibenelement (140) belastet den jeweiligen zweiten Innenwandabschnitt (41). In dieser geschlossenen Stellung klemmt die Brems- und/oder Klemmvorrichtung (10) eine in der Stangenaufnehme (22) aufgenommene Stange.

Bei einer Druckbeaufschlagung des Druckraums (16) wird der z.B. pneumatische Druck sowohl im ersten Druckraumbereich (17) als auch im zweiten Druckraumbereich (18) aufgebaut. Die beiden Kolben (90, 100) werden relativ zum Gehäuse (21) in der Längsrichtung (15) aufeinander zu verschoben. Beim Verfahren der Kolben (90, 100) schmiegt sich jedes der Scheibenelemente (120; 140) an den jeweils benachbarten Kolben (90; 100) an. Die Ringe (151, 152) werden belastet. Bei zunehmende Verfahren der Kolben (90, 100) vergrößert sich die Anlagefläche der Scheibenelemente (120, 140) an der Erhebung (98) des jeweiligen Kolbens (90, 100). Der jeweilige Innenwandabschnitt (41, 81) wird entlastet. Die Innenwandung (27) verformt sich elastisch in ihre Ausgangsstellung zurück. Auch in diesem Ausführungsbeispiel kann die Rückverformung mittels Druck auf der Kolbenoberseite (97) und/oder Unterdruck an der Kolbenunterseite (91; 101) unterstützt werden.

Die in den Figuren 19 - 25 dargestellte Brems- und/oder Klemmvorrichtung kann auch mit einem einzigen Kolben (90; 100) und mit einem einzigen Scheibenelement (120; 140) ausgebildet sein. Auch können mehrere Kolben (90; 100) relativ zum Gehäuse (21) in die gleiche Richtung verfahren. Hierbei können pro Kolben (90; 100) ein oder mehrere Scheibenelemente (120; 140) eingesetzt werden. Auch kann die Brems- und/oder Klemmvorrichtung (10) einen einzelnen verformbaren Innenwandabschnitt (41; 81) aufweisen. Es können jedoch auch mehrere Kolben (90; 100), Scheibenelemente (120; 140) und/oder Innenwandabschnitte (41; 81) eingesetzt werden. Hierbei ist beispielsweise jedem verformbaren Innenwandabschnitt (41; 81) zumindest ein Scheibenelement (120; 140) und ein Kolben (90; 100) zugeordnet.

Auch Kombinationen der einzelnen Ausführungsbeispiele sind denkbar.

### Bezugszeichenliste:

- 10: Brems- und/oder Klemmvorrichtung
- 11: gelüftete Stellung, gelöste Stellung
- 12: Klemmstellung
- 13: Anschluss, pneumatischer Anschluss
- 14: Längsachse
- 15: axiale Richtungen, Längsrichtungen
- 16: Druckraum
- 17: erster Druckraumbereich
- 18: zweiter Druckraumbereich
- 19: Verbindungskanal

- 21: Gehäuse
- 22: Stangenaufnahme
- 23: Mantelfläche von (21)
- 24: Oberseite, Stirnseite, deckelteilseitig
- 25: Unterseite, Stirnseite, bodenteilseitig
- 26: Verbindungsschrauben
- 27: Innenwandung
- 28: Trennfuge
- 29: Innensechskantschrauben, Verbindungsmittel

- 31: Deckelteil
- 32: Randbereich
- 33: Gewinde
- 34: Außenwandung
- 35: Decke
- 36: Durchbrüche
- 37: Deckeldüse
- 38: Stufenausnehmung
- 39: Scheibenauflage

- 41: Innenwandabschnitte, zweite Klemmkontaktplatten
- 42: freies Ende von (41)
- 43: Klemmkontaktzone
- 44: Klemmarm

- 47: Außenseite
- 48: Anpressfase

- 51: Bodenteil
- 52: Außenwandung
- 53: Gewinde
- 54: Durchgangsbohrung
- 56: Zentrierbolzenaufnahmen
- 57: Montagebohrungen
- 58: Verteilkanal
- 59: Innenseite

- 61: Scheibenaufnahmebereich, Aufnahmenut
- 62: Übergangsbereich
- 63: äußerer Kolbenführungsbereich
- 64: Einlaufbereich
- 65: Scheibenelementanlage, Gegenhalter

- 71: Boden
- 72: Umlaufrinne
- 73: Innenseite von (71)

- 75: Durchbrüche
- 76: Bodendüse
- 77: Stufenausnehmung

- 81: Innenwandabschnitte, erste Klemmkontaktplatten
- 82: freies Ende von (81)
- 83: Klemmkontaktzone
- 84: Klemmarm
- 85: Innenseite von (81)
- 86: Einstecknut, Gegenhalter
- 87: Außenseite
- 88: Anpressfase

- 90: Kolben, erster Kolben, Ringkolben
- 91: Unterseite von (90)
- 92: Innenfläche
- 93: Ringnut
- 94: Dichtringnut
- 95: Mantelfläche
- 96: umlaufender Ring
- 97: Kolbenoberseite
- 98: Erhebung
- 99: Scheitel von (98)

- 100: Kolben, zweiter Kolben, Ringkolben
- 101: Unterseite von (100)

- 108: Dichtring
- 109: Außendichtring

- 110: Innenring
- 111: Außenfläche
- 112: Innenfläche
- 113: innerer Kolbenführungsbereich
- 114: Stirnseiten
- 115: Gewindeeinsätze
- 116: Abstandshalter
- 117: Stützring
- 118: Stützring
- 119: Zentrierbolzenaufnahmen

- 120: Scheibenelement, erstes Scheibenelement
- 121: Scheibensegmente
- 122: zentraler Durchbruch
- 123: Schlitze
- 124: Entlastungsbohrung
- 125: Segmentdruckzone
- 126: Freifläche
- 127: Durchbrüche
- 128: Umfangsfläche

- 130: Ringraum

- 140: Scheibenelement, zweites Scheibenelement

- 151: Ring, innerer Ring
- 152: Ring, äußerer Ring

## Patentansprüche

1. Brems- und/oder Klemmvorrichtung (10) mit einem ringförmigen, mindestens einen pneumatischen oder hydraulischen Anschluss (13) aufweisenden, eine in axialer Richtung (15) orientierte Stangenaufnahme (22) umgreifenden Gehäuse (21), wobei das Gehäuse (21) ein Bodenteil (51) und ein Deckelteil (31) hat und wobei innerhalb des Gehäuses (21) mindestens ein ringförmiger Druckraum (16) angeordnet ist, **dadurch gekennzeichnet,**
- **dass** der Druckraum (16) mittels mindestens eines, eine gewölbte Kolbenoberseite (97) aufweisenden, in axialer Richtung (15) verfahrbaren Kolbens (90; 100) in axialer Richtung (15) begrenzt ist,
- **dass** der Druckraum (16) in radialer Richtung mittels der Außenwandungen (34, 52) des Gehäuses (21) und mittels mindestens eines Innenrings (110) begrenzt ist, der eine mindestens einen Innenwandabschnitt (41; 81) aufweisende Innenwandung (27) des Gehäuses (21) umgreift,
- **dass** auf der dem Druckraum (16) abgewandten, in axialer Richtung (15) zeigenden Kolbenoberseite (97) im Gehäuse (21) ein Scheibenelement (120; 140) angeordnet ist, wobei die Kolbenoberseite (97) an diesem Scheibenelement (120; 140) anliegt, anlegbar oder fixiert ist,
- **dass** der Innenwandabschnitt (41, 81) auskragend in einem Deckelteil (31) oder in einem Bodenteil (51) des Gehäuses (21) angeordnet ist und
- **dass** das Scheibenelement (120; 140) an dem Innenwandabschnitt (41; 81) anliegt, sodass mit zunehmender Verformung des Scheibenelements (120; 140) die radial in Richtung einer in axialer Richtung (15) orientierten Längsachse (14) der Brems- und/oder Klemmvorrichtung (10) gerichtete Belastung des Innenwandabschnitts (41, 81) abnimmt.

2. Brems- und/oder Klemmvorrichtung (10) nach Anspruch 1, **dadurch gekennzeichnet, dass** der Kolben (90; 100) an der Außenwandung (34, 52) und am Innenring (110) abgedichtet ist.

3. Brems- und/oder Klemmvorrichtung (10) nach Anspruch 1, **dadurch gekennzeichnet, dass** im Gehäuse (21) mindestens zwei gegenläufige Kolben (90, 100) und mindestens zwei Scheibenelemente (120; 140) angeordnet sind, wobei jeder Kolben (90; 100) an jeweils einem Scheibenelement (120; 140) anliegt, anlegbar oder fixiert ist.

4. Brems- und/oder Klemmvorrichtung (10) nach Anspruch 1, **dadurch gekennzeichnet, dass** der Innenring (110) aus zwei zueinander kongruenten Stützringen (117, 118) besteht, wobei ein erster Stützring (117) im Deckelteil (31) ausgebildet oder befestigt ist und ein zweiter Stützring (118) im Bodenteil (51) ausgebildet oder befestigt ist.

5. Brems- und/oder Klemmvorrichtung (10) nach Anspruch 1, **dadurch gekennzeichnet, dass** die Innenwandabschnitte (41; 81) entlang einer ringförmigen Linie angeordnet sind.

6. Brems- und/oder Klemmvorrichtung (10) nach Anspruch 1, **dadurch gekennzeichnet, dass** zwischen den Scheibenelementen (120; 140) zwei Ringe (151, 152) angeordnet sind, wobei ein erster Ring (151) in einem Ringraum (130) zwischen dem Innenring (110) und der Innenwandung (27) liegt und wobei ein zweiter Ring (152) an der Außenwandung (34, 52) anliegt.

7. Brems- und/oder Klemmvorrichtung (10) nach Anspruch 1, **dadurch gekennzeichnet, dass** das einzelne Scheibenelement (120; 140) im entlasteten Zustand eine flache Scheibe mit radial orientierten, an einen zentralen Durchbruch (122) angrenzenden Schlitzen (123) ist, wobei die Breite des einzelnen Schlitzes (123) größer ist als die Dicke des Scheibenelements (120; 140).

8. Brems- und/oder Klemmvorrichtung (10) nach Anspruch 1, **dadurch gekennzeichnet, dass** der einzelne Kolben (90; 100) an seiner Kolbenoberseite (97) eine dem Scheibenelement (120; 140) zugewandte koaxial zur Innenfläche (92) angeordnete Erhebung (98) hat.

9. Brems- und/oder Klemmvorrichtung (10) nach Anspruch 1, **dadurch gekennzeichnet, dass** jeder Innenwandabschnitt (41; 81) an seiner Innenseite (85) mindestens eine Klemmkontaktzone (43; 83) hat.

10. Brems- und/oder Klemmvorrichtung (10) nach Anspruch 1, **dadurch gekennzeichnet, dass** der Innenring (110) an seiner Außenfläche (111) einen inneren Kolbenführungsbereich (113) aufweist.

## Claims

1. Brake and/or clamping device (10) having an annular housing (21), having at least one pneumatic or hydraulic connection (13) and engaging around a rod holder (22) oriented in an axial direction (15), wherein the housing (21) has a bottom part (51) and a cover part (31) and wherein at least one annular pressure chamber (16) is arranged within the housing (21), **characterised in that**
- the pressure chamber (16) is delimited in the axial direction (15) by means of at least one piston (90; 100) which can be displaced in the axial direction (15) and has a curved piston top (97),
- the pressure chamber (16) is delimited in a radial direction by means of the outer walls (34, 52) of the housing (21) and by means of at least one inner ring (110), which engages around an inner wall (27) of the housing (21) having at least one inner wall section (41; 81),
- a disc element (120; 140) is arranged in the housing (21) on the piston top (97) facing away from the pressure chamber (16) and pointing in an axial direction (15), wherein the piston top (97) rests against, can rest against or is fixed to this disc element (120; 140),
- the inner wall section (41, 81) is arranged projecting in a cover part (31) or in a bottom part (51) of the housing (21) and
- the disc element (120; 140) rests against the inner wall section (41; 81) such that with increasing deformation of the disc element (120; 140), the load on the inner wall section (41, 81) directed radially in the direction of a longitudinal axis (14) of the brake and/or clamping device (10) oriented in an axial direction (15) decreases.

2. Brake and/or clamping device (10) according to Claim 1, **characterised in that** the piston (90; 100) is sealed at the outer wall (34, 52) and at the inner ring (110).

3. Brake and/or clamping device (10) according to Claim 1, **characterised in that** at least two opposing pistons (90, 100) and at least two disc elements (120; 140) are arranged in the housing (21), wherein each piston (90; 100) rests against, can rest against or is fixed to respectively one disc element (120; 140).

4. Brake and/or clamping device (10) according to Claim 1, **characterised in that** the inner ring (110) consists of two congruent support rings (117, 118), wherein a first support ring (117) is formed or attached in the cover part (31) and a second support ring (118) is formed or attached in the bottom part (51).

5. Brake and/or clamping device (10) according to Claim 1, **characterised in that** the inner wall sections (41; 81) are arranged along a ring-shaped line.

6. Brake and/or clamping device (10) according to Claim 1, **characterised in that** two rings (151, 152) are arranged between the disc elements (120; 140), wherein a first ring (151) is positioned in an annular space (130) between the inner ring (110) and the inner wall (27) and wherein a second ring (152) rests against the outer wall (34, 52).

7. Brake and/or clamping device (10) according to Claim 1, **characterised in that** the individual disc element (120; 140), in the unloaded state, is a flat disc with radially oriented slots (123) adjacent to a central through-hole (122), wherein the width of the individual slot (123) is larger than the thickness of the disc element (120; 140).

8. Brake and/or clamping device (10) according to Claim 1, **characterised in that** the individual piston (90; 100) has on its piston top (97) an elevation (98) arranged coaxially with the inner surface (92) and facing the disc element (120; 140).

9. Brake and/or clamping device (10) according to Claim 1, **characterised in that** each inner wall section (41; 81) has at least one clamping contact zone (43; 83) on its inside (85).

10. Brake and/or clamping device (10) according to Claim 1, **characterised in that** the inner ring (110) has an inner piston guiding region (113) on its outer surface (111).

## Revendications

1. Dispositif de freinage et/ou de serrage (10) comportant un boîtier annulaire (21) présentant au moins un raccord pneumatique ou hydraulique (13) et renfermant un logement de tige (22) orienté dans la direction axiale (15), dans lequel le boîtier (21) comporte un fond (51) et un couvercle (31) et dans lequel au moins une chambre de pression annulaire (16) est disposée à l'intérieur du boîtier (21), **caractérisé en ce que**
- la chambre de pression (16) est délimitée dans la direction axiale (15) au moyen d'au moins un piston (90 ; 100) présentant une face supérieure incurvée (97) et mobile dans la direction axiale (15),
- la chambre de pression (16) est délimitée dans la direction radiale par les parois extérieures (34, 52) du boîtier (21) et par au moins une bague intérieure (110), qui entoure une paroi intérieure (27) du boîtier (21) présentant au moins une section de paroi intérieure (41 ; 81),
- un élément de disque (120 ; 140) est disposé sur la face supérieure (97) du piston, opposée à la chambre de pression (16) et orientée dans la direction axiale (15) du boîtier (21), dans lequel la face supérieure (97) du piston s'appuie, peut être placée ou fixée contre cet élément de disque (120 ; 140),
- la section de paroi intérieure (41, 81) est disposée en saillie dans un couvercle (31) ou dans un fond (51) du boîtier (21) et
- l'élément de disque (120 ; 140) s'appuie contre la section de paroi intérieure (41 ; 81), de sorte que, lorsque la déformation de l'élément de disque (120 ; 140) augmente, la charge radiale exercée sur la section de paroi intérieure (41, 81) dans la direction d'un axe longitudinal (14) du dispositif de freinage et/ou de serrage (10) orienté dans la direction axiale (15) diminue.

2. Dispositif de freinage et/ou de serrage (10) selon la revendication 1, **caractérisé en ce que** le piston (90 ; 100) est étanchéifié au niveau de la paroi extérieure (34, 52) et de la bague intérieure (110).

3. Dispositif de freinage et/ou de serrage (10) selon la revendication 1, **caractérisé en ce qu'**au moins deux pistons contrarotatifs (90, 100) et au moins deux éléments de disque (120 ; 140) sont disposés dans le boîtier (21), dans lequel chaque piston (90 ; 100) s'appuie, peut être placé contre ou être fixé à un élément de disque respectif (120 ; 140).

4. Dispositif de freinage et/ou de serrage (10) selon la revendication 1, **caractérisé en ce que** la bague intérieure (110) est constituée de deux bagues d'appui (117, 118) mutuellement congruentes, dans lequel une première bague d'appui (117) est formée ou fixée dans le couvercle (31) et une deuxième bague d'appui (118) est formée ou fixée dans le fond (51).

5. Dispositif de freinage et/ou de serrage (10) selon la revendication 1, **caractérisé en ce que** les sections de paroi intérieure (41 ; 81) sont disposées le long d'une ligne annulaire.

6. Dispositif de freinage et/ou de serrage (10) selon la revendication 1, **caractérisé en ce que** deux bagues (151, 152) sont disposées entre les éléments de disque (120 ; 140), dans lequel une première bague (151) est logée dans un espace annulaire (130) entre la bague intérieure (110) et la paroi intérieure (27) et une deuxième bague (152) s'appuie contre la paroi extérieure (34, 52).

7. Dispositif de freinage et/ou de serrage (10) selon la revendication 1, **caractérisé en ce que** l'élément de disque individuel (120 ; 140), à l'état non chargé, est un disque plat présentant des fentes radiales (123) adjacentes à une percée centrale (122), dans lequel la largeur de la fente individuelle (123) est supérieure à l'épaisseur de l'élément de disque (120 ; 140).

8. Dispositif de freinage et/ou de serrage (10) selon la revendication 1, **caractérisé en ce que** le piston individuel (90 ; 100) présente sur sa face supérieure (97) une saillie (98) tournée vers l'élément de disque (120 ; 140) et disposée coaxialement à la surface intérieure (92).

9. Dispositif de freinage et/ou de serrage (10) selon la revendication 1, **caractérisé en ce que** chaque section de paroi intérieure (41 ; 81) présente au moins une zone de contact de serrage (43 ; 83) sur sa face intérieure (85).

10. Dispositif de freinage et/ou de serrage (10) selon la revendication 1, **caractérisé en ce que** la bague intérieure (110) présente sur sa surface extérieure (111) une zone de guidage de piston intérieure (113).
